# FASCICULE DE BREVET EUROPEEN

(11) **EP 3 004 245 B1**
(45) Date de publication et mention de la délivrance du brevet: **28.12.2016**
(21) Numéro de dépôt: 14732269.7
(22) Date de dépôt: 27.05.2014
(51) Int. Cl.: C08L 71/00, C08J 3/12, C08G 61/12

(54) **COMPOSITION DE POUDRES DE POLYARYLENE-ETHER-CETONE-CETONES ADAPTEES AU FRITTAGE LASER**
ZUSAMMENSETZUNG VON POLYARYLENETHERKETON-KETONPULVERN ZUM LASERSINTERN
COMPOSITION OF POLY-ARYLENE ETHER KETONE KETONE POWDERS SUITABLE FOR LASER SINTERING

(30) Priorité: 30.05.2013 FR 1354916
(43) Date de publication de la demande: 13.04.2016
(73) Titulaire: Arkema France, 92700 Colombes (FR)
(72) Inventeur: DECRAEMER, Nadine, F-27170 Beaumontel (FR); HUZE, Denis, F-27120 Fontaine sous Jouy (FR); MATHIEU, Cyrille, F-76000 Rouen (FR); STER, Hervé, F-27470 Serquigny (FR); PASCAL, Jerome, F-27410 Grandchain (FR); BRULE, Benoît, F-27170 Beaumont-le-Roger (FR)
(86) Numéro de dépôt international: PCT/FR2014/051239
(87) Numéro de publication internationale: WO 2014/191674

(56) Documents cités:
- WO-A1-2012/047613
- WO-A1-2013/068686
- US-A1- 2006 134 419
- US-A1- 2008 258 330

## Description

La présente invention concerne une composition comprenant au moins une poudre de poly-arylène-éther-cétones adaptée au frittage laser, ainsi que le procédé permettant de l'obtenir, minimisant la quantité massique de poudre restant non frittée après production de la pièce par frittage.

Les poly-arylène-éther-cétones et plus particulièrement les Poly éther-cétone-cétones (PEKK) sont des matériaux très performants. Ils sont utilisés pour des applications contraignantes en température ou/et en contraintes mécaniques, voire chimiques. On retrouve ces polymères dans des domaines aussi variés que l'aéronautique, les forages off shore, les implants médicaux. Ils peuvent être mis en oeuvre par moulage, extrusion, compression, filage, ou encore frittage laser notamment. Cependant, leur mise en oeuvre dans ce dernier procédé nécessite des conditions de préparation de la poudre assurant une bonne coulabilité permettant la mise en oeuvre dans le procédé de frittage laser tel que décrit ci-dessous.

La technologie de frittage de poudres sous un faisceau laser sert à fabriquer des objets en trois dimensions tels que des prototypes, des modèles, mais aussi des pièces fonctionnelles, notamment dans les domaines automobile, nautique, aéronautique, aérospatial, médical (prothèses, systèmes auditifs, tissus cellulaires...), le textile, l'habillement, la mode, la décoration, des boîtiers pour l'électronique, la téléphonie, la domotique, l'informatique, l'éclairage.

On dépose une fine couche de poudre sur une plaque horizontale maintenue dans une enceinte chauffée à une certaine température. Le laser apporte l'énergie nécessaire à fritter les particules de poudre en différents points de la couche de poudre selon une géométrie correspondant à l'objet, par exemple à l'aide d'un ordinateur ayant en mémoire la forme de l'objet et restituant cette dernière sous forme de tranches. Ensuite, on abaisse la plaque horizontale d'une valeur correspondant à l'épaisseur d'une couche de poudre (par exemple entre 0,05 et 2 mm et généralement de l'ordre de 0,1 mm) puis on dépose une nouvelle couche de poudre et Le laser apporte l'énergie nécessaire à fritter les particules de poudre selon une géométrie correspondant à cette nouvelle tranche de l'objet et ainsi de suite. La procédure est répétée jusqu'à ce que l'on ait fabriqué tout l'objet. On obtient à l'intérieur de l'enceinte un objet entouré de poudre non frittée. Les parties qui n'ont pas été frittées sont donc restées à l'état de poudre. Après complet refroidissement, on sépare l'objet de la poudre qui peut être réutilisée pour une autre opération. Dans ce procédé, la poudre non frittée peut représenter jusqu'à 90 % en poids ce qui engendre une grande quantité massique de poudre à recycler induisant des manipulations importantes, des risques de contaminations, voire des altérations de la qualité de la partie recyclée (jaunissement, dégradation chimique).

Il est donc cherché des conditions permettant de limiter la quantité massique de poudre non frittée à recycler en maximisant le ratio poudre frittée sur poudre non frittée.

Une manière de limiter cette quantité de poudre consiste à utiliser une poudre présentant la plus faible densité possible. La densité est définie comme le rapport des masses volumiques entre le matériau considéré et celle de l'eau et ne présente donc pas d'unité. Cependant dans un souci d'homogénéité avec ce qui est souvent lu dans la littérature on pourra assimiler la densité à la masse volumique et l'exprimer en Kg/m³.

Malheureusement les connaissances de l'homme du métier conduisent généralement à utiliser des poudres dont la densité est augmentée par un traitement nécessaire pour en améliorer la coulabilité, typiquement supérieure à 400 Kg/m³.
Jusqu'à présent il n'a pas été possible de combiner une bonne coulabilité et une faible densité.

US7847057 concerne un procédé de traitement thermique de poudres de poly-arylène-éther-cétones consistant à exposer la poudre à un traitement thermique supérieur à 30 minutes à une température supérieure de 20 °C à la température de transition vitreuse du polymère.
Ce traitement appliqué sur des Poly-éther-éther-cétones permet d'obtenir des poudres de coulabilité acceptable pour le procédé de frittage laser mais conduit à une augmentation de la densité pouvant aller jusqu'à 20 %. Ce traitement thermique permet de rendre la surface de la poudre de PEEK moins rugueuse ce qui explique leur meilleure coulabilité.

WO2012047613 décrit également un traitement thermique appliqué plus particulièrement aux poudres de poly-ether-cétones-cétones (PEKK) consistant à exposer la poudre à un traitement thermique de plusieurs heures entre les températures de transition des différentes phases cristallines, plus particulièrement en se rapprochant de la température de fusion du polymère, correspondant à la forme cristalline présentant la transition à la plus haute température. La coulabilité de la poudre s'en trouve améliorée et la cristallinité résultante de ce traitement est conservée durant le procédé de frittage, conférant à l'objet fritté certaines propriétés physiques avantageuses.

Pour répondre aux besoins de disposer de poudres de faible densité et présentant une bonne coulabilité, la demanderesse a conduit une série de tests mettant en évidence que pour certains PEKK, un traitement thermique approprié autorise l'obtention de poudres présentant aussi bien le critère de faible densité que de bonne coulabilité. Il est à noter que la poudre ainsi traitée thermiquement possède, de manière surprenante, une surface plus rugueuse que la poudre initiale, telle qu'on peut l'observer par microscopie électronique à balayage. Ceci conduit à une plus faible quantité de poudres à recycler dans un procédé de frittage laser, mais également permet une augmentation de la vitesse de mise en couche tout en réalisant des pièces sans défaut.

### Résumé de l'invention:

L'invention concerne une composition comprenant une poudre de PEKK dont la densité tassée, mesurée selon ISO 1068-1975 (F), est inférieure à 400 Kg/m³, borne comprise, de préférence inférieure à 370 Kg/m³, et de façon encore préférée inférieure à 340 Kg/m³ et dont la coulabilité présente un temps de passage en entonnoir de 12 mm inférieur à 50 s borne comprise, de préférence inférieur à 40 s ou un temps de passage en entonnoir de 17 mm inférieur à 30 s, de préférence inférieur à 25 s, la dite coulabilité étant mesurée de la façon suivante :
- Remplir des entonnoirs en verre d'orifice 17 ou 12 mm avec la poudre jusqu'à 5 mm du bord. Boucher l'orifice du bas avec le doigt.
- Mesurer au chronomètre le temps d'écoulement de la poudre
- Si l'écoulement ne se fait pas, taper sur l'entonnoir à l'aide d'une spatule. Répéter l'opération si besoin.
- Noter le temps d'écoulement et le nombre de coups tapés à l'aide de la spatule.

L'invention concerne également le procédé de traitement thermique permettant d'obtenir de telles poudres, ainsi que les objets obtenus par le procédé utilisant de telles poudres, et en particulier les objets obtenus par une technologie de frittage laser.

### Description détaillée :

Les poly-arylène-éther-cétones utilisés dans l'invention comprennent des motifs de formules IA, de formule IB et leur mélange : 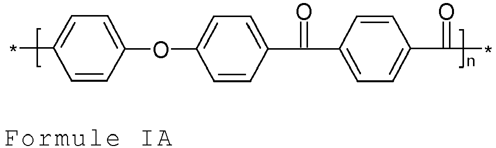 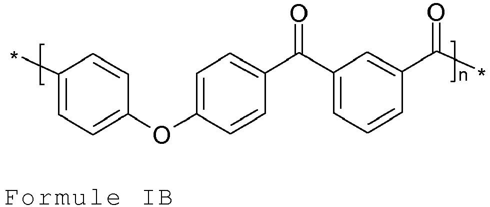 On ne saurait exclure dans un cadre plus général, les poly-arylène-éther-cétones répondant aux noms génériques PEK, PEEKEK, PEEK, PEKEKK (ou E désigne une fonction éther et K une fonction cétone) en particulier lorsque leur utilisation se fait de façon combinée à celle du PEKK dans des proportions massiques ou le PEKK représente plus de 50 % en proportion massique et de préférence plus de 80 % en proportion massique, bornes comprises.

De préférence les poly-arylène-éther-cétones sont des Poly-éther-cétones-cétones comprenant un mélange des motifs IA et IB de telle sorte que le pourcentage massique en motif téréphtalique par rapport à la somme des motifs téréphtalique et isophtalique soit compris entre 55% et 85% et de préférence entre 55% et 70%, idéalement 60%. Par motif téréphtalique et isophtalique, on entend la formule des acides téréphtalique et isophtalique respectivement.

Ces poly-arylène-éther-cétones se présentent sous forme de poudres pouvant avoir été préparées par broyage ou précipitation.

Ils se présentent après le procédé de traitement thermique de l'invention sous forme d'une poudre dont la densité tassée est inférieure à 400 Kg/m³, borne comprise, de préférence inférieure à 370 Kg/m³, et de façon encore préférée inférieure à 340 Kg/m³, cette densité étant mesurée selon la norme ISO 1068-1975 (F), une coulabilité en entonnoir de 12mm inférieure à 50 s et de préférence inférieure à 40 s, ou une coulabilité en entonnoir de 17mm inférieure à 30 s et de préférence inférieure à 25 s .

Les poudres ou mélanges de poudres utilisés dans le procédé peuvent être obtenus par exemple par un procédé de broyage décrit dans la demande FR 1160258. Elles peuvent le cas échéant être additivées ou contenir différents composés tel des charges renforçantes, notamment des charges minérales telles que le noir de carbone, des nanotubes, de carbone ou non, des fibres, broyées ou non, des agents stabilisants (lumière, en particulier UV, et chaleur), des agents facilitant l'écoulement tel que la silice ou encore des azurant optiques, colorant, pigments ou une combinaison de ces charges ou additifs.

Le procédé de traitement de telles poudres conformes à l'invention et permettant d'obtenir les poudres conformes à l'invention consiste à faire séjourner la poudre dans un dispositif statique ou dynamique, typiquement une enceinte ventilée et maintenue en température, typiquement entre une température T-10°C et T +10°C, ou T=3.75*A+37.5, exprimée en °C (A représentant le pourcentage massique en motif téréphtalique par rapport à la somme des motifs téréphtalique et isophtalique est compris entre 55 % et 85 %), de préférence entre T-5°C et T+5°C, et de façon encore préférentielle entre T-3°C et T+3°C, idéalement T durant des temps variables selon le type d'enceinte de chauffage utilisé, typiquement supérieurs à 2 minutes. Parmi les types d'enceintes de chauffage considérées, on peut citer de manière non limitative les étuves ventilées, les lits fluidisés, les sécheurs flash, les sécheurs à palette, les sécheurs avec axe vertical, les fours rotatifs, ou encore les tunnels chauffés à l'aide de lampes infrarouge. On ne sortirait pas du cadre de l'invention en réalisant plusieurs traitements thermiques successifs (à la même température ou à deux températures différentes comprises entre T-10°C et T +10°C, ou T=3.75*A+37.5, exprimée en °C, A représentant le pourcentage massique en motif téréphtalique par rapport à la somme des motifs téréphtalique et isophtalique). Dans ce dernier cas, la température du 2^{ème} traitement est supérieure à la température du 1^{er} traitement.

La poudre issue de ce traitement thermique est ensuite utilisée dans un dispositif de frittage de poudres sous un faisceau laser afin de permettre la fabrication d'un objet.

Alors que dans ce procédé de fabrication d'objet il n'est pas rare de constater que seulement 10% en poids de la poudre est effectivement fritté, le reste devant être recyclé, l'utilisation des poudres objet de l'invention et traitées par le procédé de l'invention permet d'obtenir, en partant de poudre de densité dite faible (c'est à dire < 400 Kg/m³), une pièce frittée de densité typique de 1290 Kg/m³ plus ou moins 20 Kg/m³ avec une porosité résiduelle de la pièce frittée inférieure ou égale à 2%. La proportion massique de poudre non frittée restant à ré-utiliser est donc plus faible avec la poudre de l'invention (densité < 400 Kg/m³) qu'avec les poudres obtenues selon l'art antérieur, ceci induisant une spectaculaire augmentation de productivité en minimisant des manipulations importantes, des contaminations, voire des altérations de la qualité de la partie recyclée afin d'obtenir des objets présentant moins de défaut.

### Exemples :

Exemple 1 : mesure de la densité :
   La densité tassée et non tassée est mesurée selon la norme ISO 1068-1975 (F) de la façon suivante :

### Densité tassée et non tassée

- Réaliser la tare de la balance avec l'éprouvette vide préalablement nettoyée et séchée
- Introduire un volume de poudre dans une éprouvette de précision en verre de 250 ml graduée
- Niveler si nécessaire la surface libre de la poudre sans la tasser et noter le volume V₀
- Pesée d'éprouvette avec la poudre avec une balance de précision à 0.1 g
- Placer l'éprouvette sur le plateau de l'appareil de tassement STAV 2003
- Tasser avec 1250 chutes, noter V₁
- Tasser avec 1250 chutes, noter V₂
- Répéter l'opération de tassement jusqu'à obtenir 2 volumes Vi équivalents. Noter V_{f}

La densité non tassée est la masse de poudre introduite divisée par V₀

La densité tassée est la masse de poudre introduite divisée par V_{f}

Elle est exprimée en Kg/m³.

### Exemple 2 : mesure de la coulabilité :

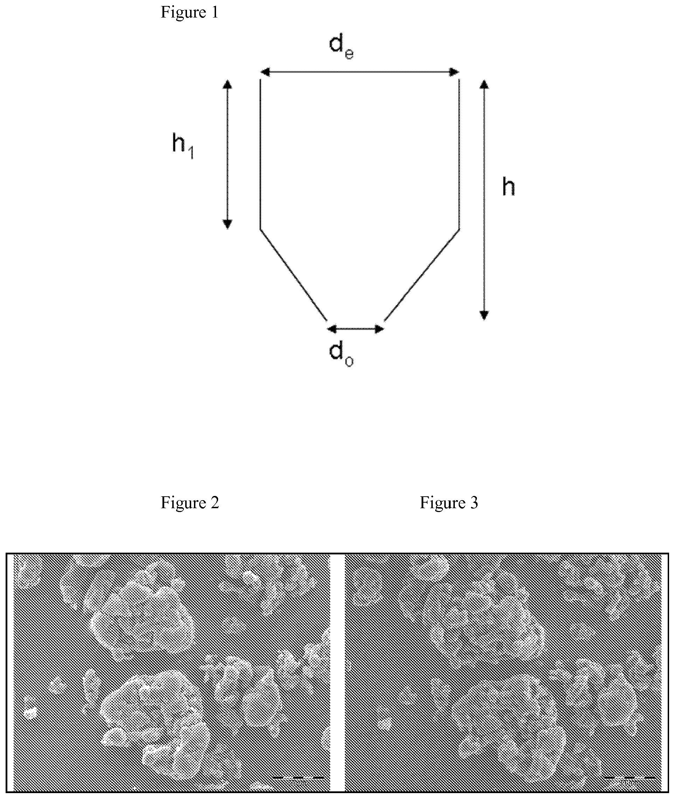

La coulabilité de ces poudres a été réalisée dans des entonnoirs en verre de la façon suivante :
- Remplir des entonnoirs en verre d'orifice 17 ou 12 mm (figure 1) avec la poudre jusqu'à 5 mm du bord. Boucher l'orifice du bas avec le doigt.

Avec pour entonnoir 12 mm:
de=39,2 mm
dₒ=12 mm
h=106 mm
h₁= 83 mm
et pour entonnoir 17 mm:
dₑ=42,0 mm
dₒ= 17 mm
h=112 mm
h₁=67 mm

- Mesurer au chronomètre le temps d'écoulement de la poudre.
- Si l'écoulement ne se fait pas, taper sur l'entonnoir à l'aide d'une spatule. Répéter l'opération si besoin.
- Noter le temps d'écoulement et le nombre de coups tapés à l'aide de la spatule.

### Exemple 3 :

Une poudre Kepstan® 6003 de la société Arkema, contenant 60 % de motifs téréphtaliques par rapport à la somme des motifs téréphtalique et isophtalique, dont la taille de particule présente un dv50 de 50µm plus ou moins 5µm, de densité non tassée de 235 Kg/m³ et de densité tassée de 355 Kg/m³ est soumise à différents traitements thermiques en étuve ventilée dans un cristallisoir. On dispose la poudre dans un cristallisoir de telle sorte que l'épaisseur du lit de poudre soit compris entre 1 et 1.5 cm.
Le Dv50 est aussi appelé ici diamètre médian en volume qui correspond à la valeur de la taille de particule qui divise la population de particules examinée exactement en deux. Le Dv50 est mesuré selon la norme ISO 9276 - parties 1 à 6. Dans la présente description, on utilise un granulomètre Malvern Mastersizer 2000, et la mesure est faite en voie liquide par diffraction laser sur la poudre.
Après traitement, les poudres ont été tamisées sur un tamis vibrant de 250 µm pour les désagglomérer.

Les résultats sont donnés au tableau 1 pour des temps de séjours de 16 h.

**Tableau 1**

| | | **T=0** | **16 h à 200°C** | **16h à 260°C** | **19h à 285°C** |
|---|---|---|---|---|---|
| Densité non tassée (Kg/m³) | | 235 | 238 | 235 | 205 |
| Densité tassée (Kg/m³) | | 355 | 350 | 335 | 315 |
| Coulabilité entonnoir 12 mm | Temps (s) | 95 | 55 | 30 | 50 |
| | Nombre coups | multi | multi | 25 | multi |
| Coulabilité entonnoir 17 mm | Temps (s) | 50 | 40 | 10 | 40 |
| | Nombre coups | 40 | 30 | 4 | 27 |
| Taux d'humidité | | 0,45% | 0,16% | 0,23% | 0,23% |

Les résultats montrent clairement qu'un traitement à 260°C améliore très significativement la coulabilité tout en diminuant la densité tassée.

On peut visionner au microscope électronique à balayage l'effet du traitement thermique sur la morphologie des poudre en figure 2 (avant traitement thermique) et en figure 3 (après traitement thermique). Sur ces mêmes particules de poudre observées avant et après le traitement thermique, il apparait que le traitement en température selon l'invention induit une rugosité aux particules de poudre.

## Revendications

1. Composition comprenant une poudre de PEKK dont la densité tassée est inférieure à 400 Kg/m3, borne comprise, mesurée selon ISO 1068-1975 (F) et dont la coulabilité présente un temps de passage en entonnoir de 12 mm inférieur à 50 s borne comprise, ou un temps de passage en entonnoir de 17 mm inférieur à 30 s.

2. Composition selon la revendication 1 dans laquelle le PEKK présente un pourcentage massique en motif téréphtalique par rapport à la somme des motifs téréphtalique et isophtalique compris entre 55% et 85%.

3. Composition selon la revendication 1 dans laquelle en plus du PEKK on adjoint une poudre de PEK, PEEKEK, PEEK, PEKEKK, le PEKK représentant plus de 50 % massique, borne comprise.

4. Composition selon la revendication 1 contenant une charge.

5. Composition selon la revendication 1 contenant au moins un additif.

6. Procédé de traitement thermique autorisant la préparation d'une poudre selon l'une des revendications 1 à 5 comprenant les étapes suivantes :
- Disposition de la poudre dans une enceinte ventilée dans un dispositif statique ou dynamique.
- Chauffage de la poudre à une température T-10°C et T +10°C, ou T=3.75*A+37.5, exprimée en °C, A représentant le pourcentage massique en motif téréphtalique téréphtaliques par rapport à la somme des motifs téréphtalique et isophtalique et est compris entre 55 % et 85 %, durant des temps supérieurs à 2 minutes.

7. Utilisation d'une poudre selon l'une des revendications 1 à 5 ou susceptible d'être obtenue par le procédé selon la revendication 6 dans un dispositif de frittage laser.

8. Utilisation d'une poudre selon l'une des revendications 1 à 5 ou susceptible d'être obtenue par un le procédé selon la revendication 6 dans une technologie de frittage de poudres sous un faisceau laser permettant une minimisation de la quantité de poudre à recycler.

## Patentansprüche

1. Zusammensetzung, umfassend ein PEKK-Pulver mit einer nach ISO 1068-1975 (F) gemessenen Klopfdichte von weniger als 400 kg/m3, einschließlich des Grenzwerts, und mit einer Rieselfähigkeit, die eine Durchlaufzeit in einem 12 mm-Trichter von weniger als 50 s, einschließlich des Grenzwerts, oder eine Durchlaufzeit in einem 17 mm-Trichter von weniger als 30 s aufweist.

2. Zusammensetzung nach Anspruch 1, wobei das PEKK-Pulver einen Gewichtsprozentanteil an Terephthalsäure-Motiv, bezogen auf die Summe an Terephthal- und Isophthalsäure-Motiven, zwischen 55 Gew.-% und 85 Gew.-% aufweist.

3. Zusammensetzung nach Anspruch 1, bei dem man zusätzlich zu dem PEKK- ein PEK-, PEEKEK-, PEEK-, PEKEKK-Pulver hinzufügt, wobei das PEKK-Pulver mehr als 50 Gew.-%, einschließlich des Grenzwerts, ausmacht.

4. Zusammensetzung nach Anspruch 1, die einen Füllstoff enthält.

5. Zusammensetzung nach Anspruch 1, die mindestens ein Additiv umfasst.

6. Wärmebehandlungsverfahren, das die Herstellung eines Pulvers nach einem der Ansprüche 1 bis 5 ermöglicht und die folgenden Schritte umfasst:
- Einbringen des Pulvers in einer belüfteten Kammer in eine statische oder dynamische Vorrichtung.
- Erhitzen des Pulvers auf eine Temperatur T-10°C und T+10°C, wobei T = 3,75*A+37,5, ausgedrückt in °C, A für die Gewichtsprozent an Terephthalsäure-Motiv Terephthalsäuren, bezogen auf die Summe der Terephthal- und Isophthalsäure-Motive, steht und zwischen 55% und 85% beträgt, für Zeiträume von mehr als 2 Minuten.

7. Verwendung eines Pulvers nach einem der Ansprüche 1 bis 5 oder erhältlich durch das Verfahren nach Anspruch 6 in einer Lasersintervorrichtung.

8. Verwendung eines Pulvers nach einem der Ansprüche 1 bis 5 oder erhältlich durch das Verfahren nach Anspruch 6 bei einer Technologie zum Sintern von Pulvern unter einem Laserstrahl, wodurch die Menge an zu rezyklierendem Pulver minimiert werden kann.

## Claims

1. Composition comprising a PEKK powder, the tapped density of which is less than 400 kg/m³, limit included, measured according to ISO 1068-1975 (F), and the flowability of which exhibits a passage time in a 12 mm funnel of less than 50 s, limit included, or a passage time in a 17 mm funnel of less than 30 s.

2. Composition according to Claim 1, in which the PEKK exhibits a percentage by weight of terephthalic unit with respect to the sum of the terephthalic and isophthalic units of between 55% and 85%.

3. Composition according to Claim 1, in which, in addition to the PEKK, a PEK, PEEKEK, PEEK or PEKEKK powder is added, the PEKK representing more than 50% by weight, limit included.

4. Composition according to Claim 1, containing a filler.

5. Composition according to Claim 1, containing at least one additive.

6. Heat treatment process which allows the preparation of a powder according to one of Claims 1 to 5, comprising the following stages:
- Arranging the powder in a ventilated chamber in a static or dynamic device.
- Heating the powder at a temperature T-10°C and T+10°C, where T=3.75*A+37.5, expressed in °C, A representing the percentage by weight of terephthalic unit terephthalics with respect to the sum of the terephthalic and isophthalic units and is between 55% and 85%, for times of greater than 2 minutes.

7. Use of a powder according to one of Claims 1 to 5 or capable of being obtained by the process according to Claim 6 in a laser sintering device.

8. Use of a powder according to one of Claims 1 to 5 or capable of being obtained by the process according to Claim 6 in a technology for the sintering of powders under a laser beam which makes it possible to minimize the amount of powder to be recycled.
